# EUROPÄISCHE PATENTANMELDUNG

(11) **EP 2 423 369 A1**
(43) Veröffentlichungstag der Anmeldung: **29.02.2012**
(21) Anmeldenummer: 11401555.5
(22) Anmeldetag: 20.07.2011
(51) Int. Cl.: D06F 37/22, F16F 3/04

(54) **Wäschebehandlungsmaschine**

(30) Priorität: 23.08.2010 DE 102010037103
(71) Anmelder: Miele & Cie. KG, 33332 Gütersloh (DE)
(72) Erfinder: Gebhard, Helmuth, 31275 Lehrte (DE); Heisenberger, Frank, 30559 Hannover (DE)

(57) **Zusammenfassung**

Die Erfindung betrifft eine Wäschebehandlungsmaschine (1) mit einem in einem Gehäuse (2) angeordneten Waschaggregat (3), welches aus einem Laugenbehälter (4) besteht, in dem um eine horizontale Achse eine Trommel (5) drehbar gelagert ist, die mittels eines Motors (6) antreibbar ist, und wobei das Waschaggregat (3) im Gehäuse (2) federnd und schwingungsgedämpft gelagert ist. Hierbei weist das Waschaggregat (3) jeweils in den vorderen und in den hinteren Eckbereichen (7, 8) und (9, 10) federnde Halterungen (11) auf, die auf einem als Rahmen (19) ausgebildeten Unterbau (12) befestigt sind, wobei die einzelne federnde Halterung (11) aus jeweils zumindest zwei Druckfedern (13) und (14) mit unterschiedlichen Federkennlinien gebildet ist.

## Beschreibung

Die Erfindung betrifft eine Wäschebehandlungsmaschine mit einem in einem Gehäuse angeordneten Waschaggregat, welches aus einem Laugenbehälter besteht, in dem um eine horizontale Achse eine Trommel drehbar gelagert ist, die mittels eines Motors antreibbar ist, und wobei das Waschaggregat im Gehäuse federnd und schwingungsgedämpft gelagert ist.

Aus dem Stand der Technik gemäß der DE 21 09 883 C2 ist eine Wäschebehandlungsmaschine bekannt, die über wenigstens ein Federbein zur schwingungsgedämpften Halterung eines Arbeitsaggregates einer Wasch- und/oder Schleudermaschine verfügt. Beim Auftreten von Unwuchtschwingungen wird während des Zusammendrückens des Federbeins ein Dämpfungsglied ebenfalls zusammengedrückt, um auf diese Weise eine Dämpfung der Schwingung zu bewirken. Das nach dem Stand der Technik bekannte Federbein ist derart ausgelegt, dass es mit ansteigender Dämpfung die Unwuchtschwingungen in vertikaler Richtung auffängt, also auch für Trommelmaschinen mit waagerechter Achse geeignet ist. Das bekannte Federbein ist einfach herzustellen und dabei auch leicht zu montieren, wobei das Dämpfungsglied sich mit seinem freien Ende mit einer Schulter auf der Feder des Federbeins abstützt, wobei es an seiner der Feder abgewandten Seite eine Verlängerungshülle aufweist, die durch den der Maschine zugeordneten Sitz hindurchragt.

Eine derartige nach dem Stand der Technik bekannte schwingungsgedämpfte Lagerung des Waschaggregates weist dahingehend Nachteile auf, dass insbesondere die federnde Lagerung nicht die hinreichende Schwingungsdämpfung bereit hält, wobei insbesondere bei gewerblichen Maschinen, die ein hohes Fassungsvermögen haben, die Federbeine konstruktiv äußerst aufwendig und damit kostenungünstig ausfallen.

Der Erfindung stellt sich das Problem, eine Wäschebehandlungsmaschine mit einem in einem Gehäuse angeordneten Waschaggregat derart weiter zu bilden, dessen schwingungsgedämpftes Waschaggregat, von der federnden Lagerung her, wesentlich einfacher aufbauend und kostengünstiger herzustellen ist.

Erfindungsgemäß wird dieses Problem mit einer Wäschebehandlungsmaschine mit den Merkmalen des Anspruchs 1 gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen darin, dass infolge des Einsatzes von zumindest zwei Druckfedern pro Auflagerpunkt in den Eckbereichen die federnde Lagerung wesentlich einfacher aufbaut, da zwei Federn mit unterschiedlichen Kennlinien hier einfach kombiniert werden können, und somit entsprechend in einem Auflagerpunkt gemeinsam arretiert werden können. Durch die zwei mit unterschiedlichen Federkennlinien ausgestalteten Druckfedern ergibt sich ein begünstigendes Resonanzverhalten, welches einen ruhigen Lauf beim Schleudergang des Wäscheaggregates bereit stellt. Die zylindrischen Schraubenfedern werden aus runden Drähten mit konstantem Durchmesser produziert, wobei der mittlere Abstand der Windungen längs der Federachse konstant ist. Diese technischen Federn verfügen über eine lineare Kennlinie, wobei hauptsächlich die Federachse beansprucht wird. Dadurch, dass zwei mit unterschiedlichen Kennlinien ausgebildete Druckfedern ineinander gefügt werden, ergibt sich für das Gesamtbild der Federn bzw. als resultierende Funktion eine wesentlich neue gedämpfte Federkennlinie, die sich im gewerblichen Maschinenbereich für das schwingende Aggregat auf dem Unterbau sehr günstig auswirkt. Wichtig dabei ist, dass die durch die Unwucht in der Trommel erzeugte Bewegung des schwingenden Aggregats so klein wie möglich gehalten wird. Ferner wird beim Verkippen des Aggregats, wie dies beispielsweise beim Beladen auftritt, schneller die Ausgangslage erreicht. Dies wird erfindungsgemäß dadurch erreicht, dass man zwei Druckfedern je Maschinenecke einsetzt und aus Platzgründen ineinander steckt. Dies hat den Vorteil, dass trotz einer angestrebten relativ kleinen Gesamtfederrate der Federpaare eine hohe Querfederrate erreicht werden kann. Durch die unterschiedliche Wickelrichtung der beiden Druckfedern wird ein Verdrehen der schwingenden Einheit um die Hochachse verhindert bzw. zumindest vermindert. Bedingt dadurch, dass die beiden Druckfedern auf einer Achse liegen, ist auch nur eine Federaufnahme erforderlich, was insbesondere eine platzsparende und auch kostengünstige Einbindung zur Folge hat.

Erfindungsgemäß weist hierzu das Waschaggregat jeweils in den vorderen und den hinteren Eckbereichen federnde Halterungen auf, die auf einem, als Rahmen ausgebildeten Unterbau befestigt sind, wobei die einzelne federnde Halterung jeweils aus zwei Druckfedern mit unterschiedlichen Federkennlinien gebildet werden. Hierbei sind die beiden Druckfedern ineinander koaxial angeordnet, wobei die beiden Druckfedern einen gemeinsamen Halterungspunkt einnehmen. In Weiterbildung der Erfindung weisen die beiden als Schraubenfedern ausgebildeten Druckfedern unterschiedliche Wickelrichtungen auf. Die beiden Druckfedern mit ihren freien Enden sind in einer gemeinsamen Federaufnahme am Waschaggregat sowie in einer gemeinsamen Federaufnahme am Rahmen des Unterbaus eingefasst. Im Bereich der Aufnahme am Waschaggregat sowie an der Aufnahme am Rahmen sind vorzugsweise Halterungen für die zusätzliche Anbringung eines Stoßdämpfers vorgesehen.

Zur Festlegung der Federaufnahme am Waschaggregat ist jeweils seitlich im unteren Bereich des Mantels des Laugenbehälters ein eine Dreiecksform einnehmender Winkelblechstreifen angeformt, der insbesondere das Auflager für die Doppelfederung bereit stellt. Zum Unterbau hin sind zur Festlegung der Federaufnahme am Rahmen, jeweils an den Längsseiten des Rahmens, U-förmig ausgebildete Winkelblechstreifen vorgesehen. Somit ergeben sich sowohl Aggregatseitig als auch Unterbauseitig entsprechende gemeinsame Halterungen für die Druckfedern. Die Federaufnahmen als solches sind hierbei topfartig ausgebildet, so dass die freien Enden von dem Topf aufgenommen werden. Dabei entspricht der die Federaufnahme bildende Topf im Durchmesser etwa dem Außendurchmesser der außen liegenden Schraubenfeder, so dass insbesondere dadurch eine stabile Lage und ein Fixpunkt für die Federn gegeben sind. Zur stabilen Einbindung der Innenfeder entspricht der Innendurchmesser der außen liegenden Schraubenfeder etwa dem Außendurchmesser der innen liegenden Schraubenfeder.

In einer anderen Ausführung umfasst die topfförmige Aufnahme einen zur Feder gerichteten, umlaufenden, ringförmigen Steg, wobei der Außendurchmesser dieses als Führung ausgebildeten Stegs etwa dem Innendurchmesser der außen liegenden Schraubfeder entspricht und der Innendurchmesser des ringförmigen Stegs etwa dem Außendurchmesser der innen liegenden Schraubfeder entspricht. Die Stegbreite definiert hierbei den Abstand zwischen der außen liegenden Feder und der innen liegenden Feder, sodass ein gegenseitiges Anschlagen der Federn vermieden oder verhindert wird.

Ein Ausführungsbeispiel der Erfindung ist in den Zeichnungen rein schematisch dargestellt und wird nachfolgend näher beschrieben. Es zeigt:
- Figur 1: eine geschnittene Seitenansicht einer Wäschebehandlungsmaschine;
- Figur 2: eine perspektivische Darstellung in Einzelansicht eines Waschaggregates; mit federnder Lagerung;
- Figur 3: eine Einzelansicht einer federnden Halterung in einer ersten Ansicht;
- Figur 4: die federnde Halterung gemäß der Erfindung in einer anderen Ansicht und
- Figur. 5: die federnde Halterung in einer geschnittenen Ansicht.

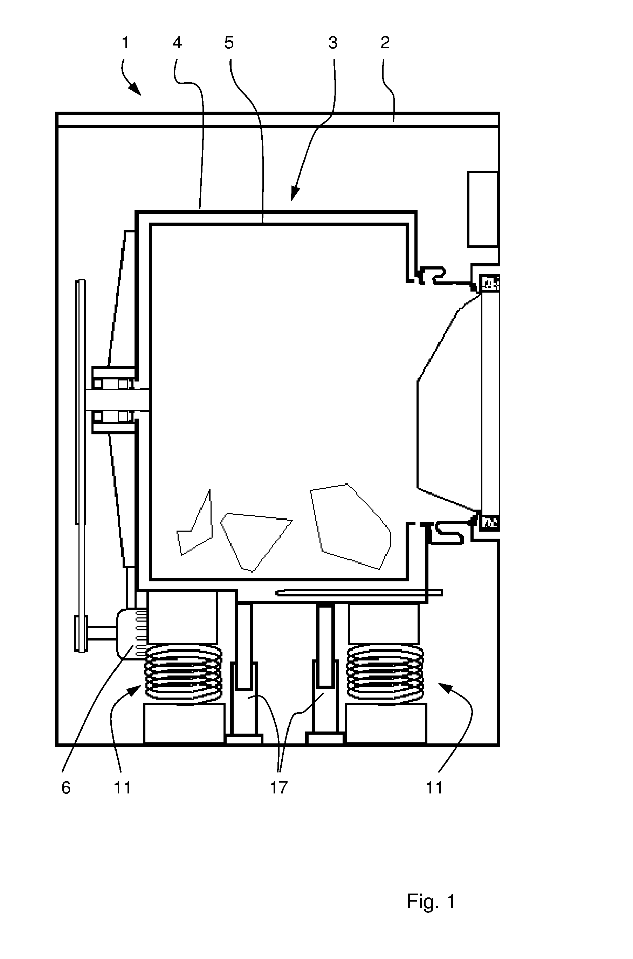

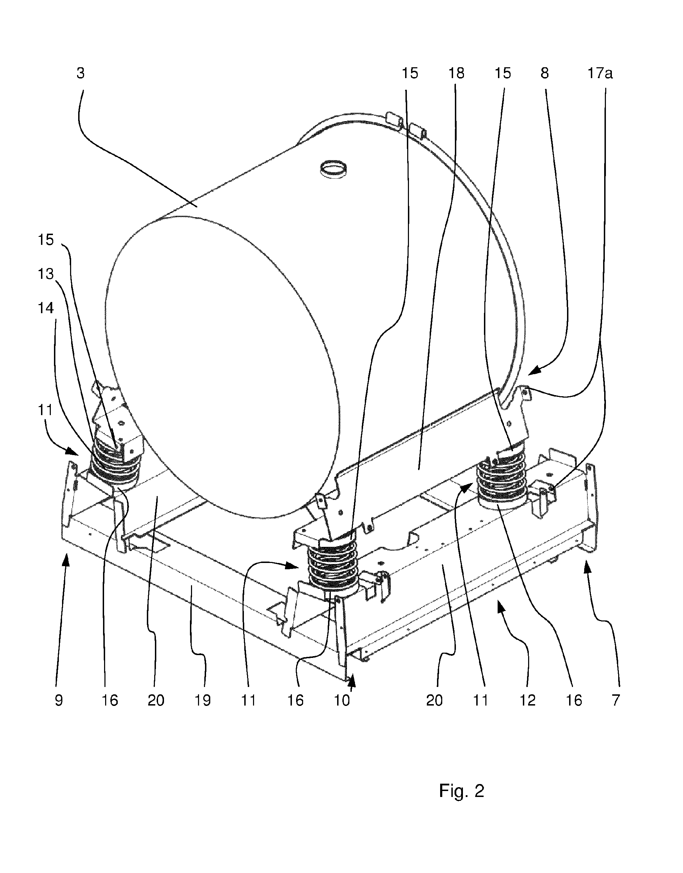

Die Figur 1 zeigt in der geschnittenen Seitenansicht eine Wäschebehandlungsmaschine 1 mit einem in einem Gehäuse 2 angeordneten Waschaggregat 3, wie dies insbesondere in der perspektivischen Darstellung der Figur 2 näher dargestellt ist. Das Waschaggregat 3 besteht hierbei aus einem Laugenbehälter 4, in dem um eine horizontale Achse eine Trommel 5 drehbar gelagert ist, die mittels eines Motors 6 antreibbar ist. Das Waschaggregat 3 ist in dem Gehäuse 2 federnd und schwingungsgedämpft gelagert.

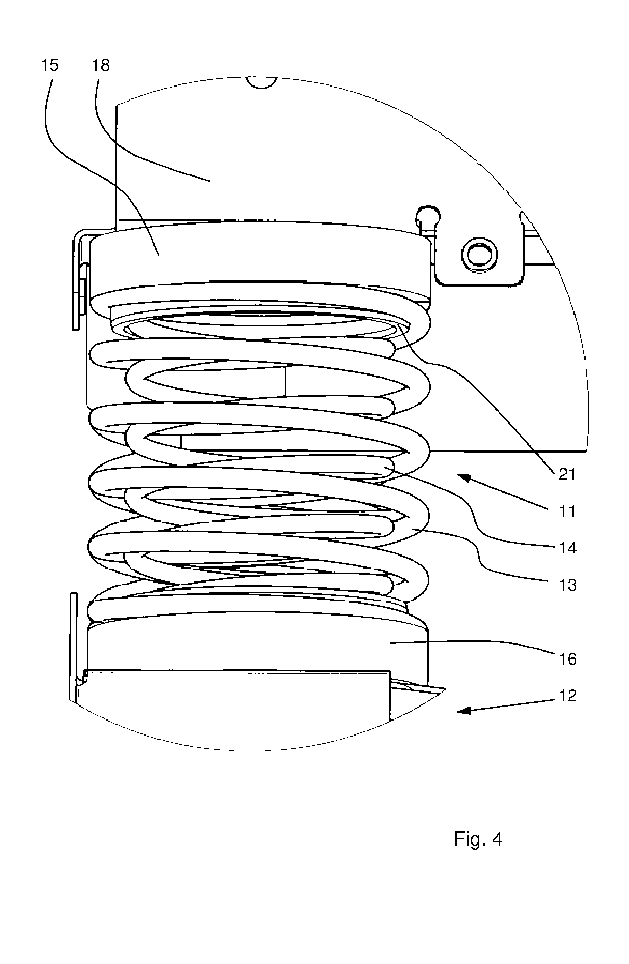

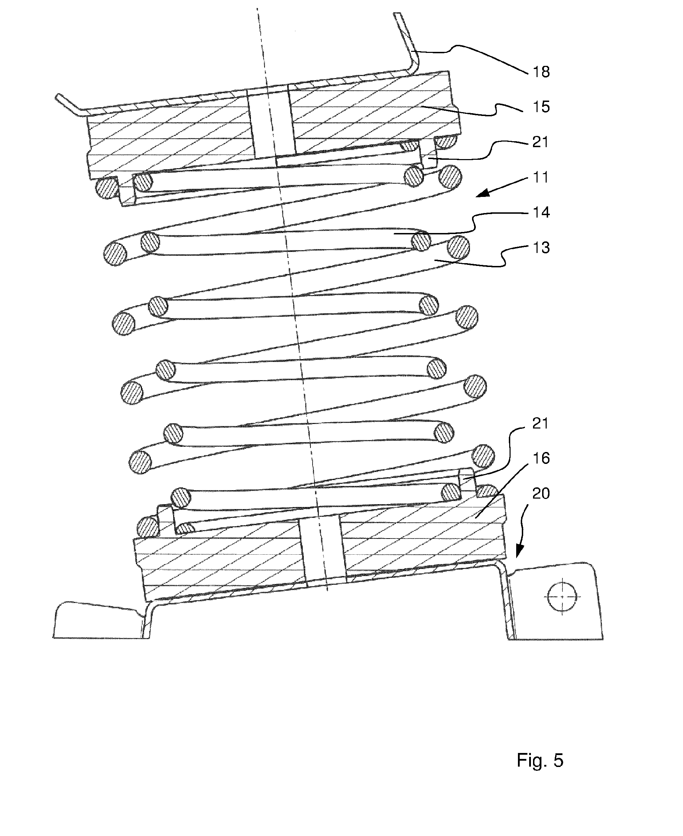

Wie insbesondere aus der Zusammenschau der Figuren 1 und 2 ersichtlich ist, weist das Wäscheaggregat 3 jeweils in den vorderen und hinteren Eckbereichen 7, 8, 9 und 10 federnde Halterungen 11 auf, die auf einem als Rahmen ausgebildeten Unterbau 12 befestigt sind. Dabei besteht die einzelne federnde Halterung 11 aus jeweils zwei Druckfedern 13 und 14 mit unterschiedlichen Federkennlinien, wie dies insbesondere aus der Figur 4 und 5 ersichtlich ist. Die beiden Druckfedern 13 und 14 sind hierbei koaxial ineinander angeordnet. Dabei bilden die beiden Druckfedern 13 und 14 einen gemeinsamen Halterungspunkt, sowohl am Unterbau 12 als auch am Wäscheaggregat 3. Die beiden als Schraubenfedern ausgebildeten Druckfedern 13 und 14 weisen hierbei unterschiedliche Wickelrichtungen auf, so dass sich eine gegensinnige Wickelrichtung ergibt.

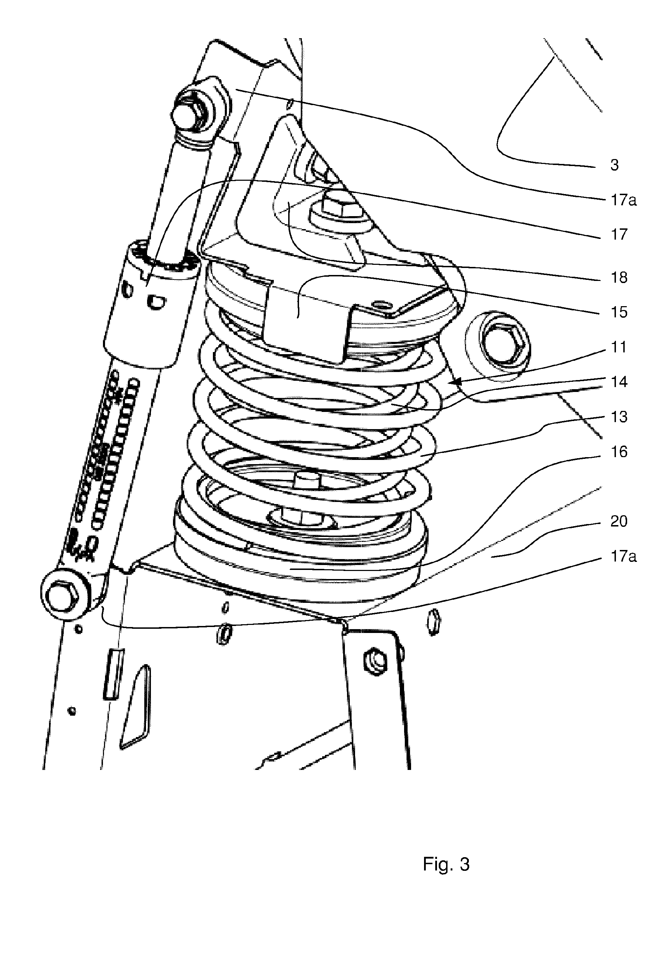

Die beiden Druckfedern 13 und 14 sind mit ihren freien Enden in einer gemeinsamen Federaufnahme 15 am Waschaggregat 3 sowie in einer gemeinsamen Federaufnahme 16 am Rand des Unterbaus 12 eingefasst. Wie aus der Figur 3 zu erkennen ist, sind im Bereich der Federaufnahme 15 am Wäscheaggregat 3 sowie an der Federaufnahme 16 am Unterbau 12 Halterungen 17a für die Anbringung eines Stoßdämpfers 17 vorgesehen. Wie aus der Figur 2 ersichtlich ist, ist zur Festlegung der Federaufnahme 15 am Waschaggregat 3 jeweils seitlich im unteren Bereich des Mantels des Laugenbehälters 4 ein eine Dreiecksform einnehmender Winkelblechstreifen 18 angeordnet. Zur Festlegung der Federaufnahme 16 am Unterbau 12 sind jeweils an den Längsseiten des Rahmens 19 U-förmig ausgebildete Winkelblechstreifen 20 vorgesehen, wobei jeweils auf den Winkelblechstreifen 18 am Mantel des Laugenbehälters 4, sowie auf den Winkelblechstreifen 20, die Federaufnahmen 15 und 16 topfartig ausgebildet sind. Dabei entspricht der die topfförmige Federaufnahme 15, 16 im Durchmesser etwa dem Außendurchmesser der außen liegenden Schraubenfeder 13, wobei der Innendurchmesser der außen liegenden Schraubenfeder 13 etwa dem Außendurchmesser der innen liegenden Schraubenfeder 14 entspricht. Somit wird sichergestellt, dass die Federn 13 und 14 in ihrer Zwangshalterung nicht auswandern können, und somit, wie bereits schon ausgeführt, die zwei Druckfedern 13 und 14 je Maschinenecke aus Platzgründen ineinander stecken. Dies hat den Vorteil, dass trotz einer angestrebten relativ kleinen Gesamtfederrate der Federpaare, eine hohe Querfederrate erreicht werden kann. Durch unterschiedliche Wickelrichtungen der beiden Druckfedern 13 und 14 wird ein Verdrehen der schwingenden Einheit 3 um die Hochachse verhindert bzw. vermindert. Bedingt dadurch, dass die beiden Druckfedern 13 und 14 auf einer Achse liegen, ist nur eine Art der Federaufnahme 15 und 16 erforderlich.

Aus Fig. 4 und 5 ist ferner zu erkennen, dass gemäß einer anderen, vorteilhaften Ausführung die Federaufnahme 15, 16 einen zur Feder 13, 14 gerichteten, umlaufenden, ringförmigen Steg 21 umfasst. Der an der Halterung angeformte oder fest angebrachte Steg 21 ist so dimensioniert, dass der Außendurchmesser etwa dem Innendurchmesser der außen liegenden Schraubfeder 13 entspricht und der Innendurchmesser etwa dem Außendurchmesser der innen liegenden Schraubfeder 14 entspricht. Somit wird eine auf einfache Weise eine sichere Anlage bzw. Führung für beide Schraubfedern 13, 14 bereitgestellt.

## Patentansprüche

1. Wäschebehandlungsmaschine (1) mit einem in einem Gehäuse (2) angeordneten Waschaggregat (3), welches aus einem Laugenbehälter (4) besteht, in dem um eine horizontale Achse eine Trommel (5) drehbar gelagert ist, die mittels eines Motors (6) antreibbar ist, und wobei das Waschaggregat (3) im Gehäuse (2) federnd und schwingungsgedämpft gelagert ist,
**dadurch gekennzeichnet,**
**dass** das Waschaggregat (3) jeweils in den vorderen und in den hinteren Eckbereichen (7, 8) und (9, 10) federnde Halterungen (11) aufweist, die auf einem als Rahmen (19) ausgebildeten Unterbau (12) befestigt sind, wobei die einzelne federnde Halterung (11) jeweils zumindest aus zwei Druckfedern (13) und (14) mit unterschiedlichen Federkennlinien gebildet ist.

2. Wäschebehandlungsmaschine nach Anspruch 1,
**dadurch gekennzeichnet,**
**dass** die beiden Druckfedern (13) und (14) ineinander koaxial angeordnet sind.

3. Wäschebehandlungsmaschine nach Anspruch 2,
**dadurch gekennzeichnet,**
**dass** die beiden Druckfedern (13) und (14) einen gemeinsamen Halterungspunkt bilden.

4. Wäschebehandlungsmaschine nach Anspruch 2 oder 3,
**dadurch gekennzeichnet,**
**dass** die beiden als Schraubenfedern ausgebildete Druckfedern (13) und (14) unterschiedliche Wickelrichtungen aufweisen.

5. Wäschebehandlungsmaschine nach Anspruch 3 oder 4,
**dadurch gekennzeichnet,**
**dass** die beiden Druckfedern (13) und (14) mit ihren freien Enden in einer gemeinsamen Federaufnahme (15) am Waschaggregat (3) sowie in einer gemeinsamen Federaufnahme (16) am Rahmen (19) des Unterbaus (12) eingefasst sind.

6. Wäschebehandlungsmaschine nach Anspruch 1,
**dadurch gekennzeichnet,**
**dass** im Bereich der Federaufnahme (15) am Waschaggregat (3) sowie an der Federaufnahme (16) am Rahmen (19) des Unterbaus (12) Halterungen (17a) für die Anbringung eines Stoßdämpfers (17) vorgesehen sind.

7. Wäschebehandlungsmaschine nach Anspruch 3 bis 5,
**dadurch gekennzeichnet,**
**dass** zur Festlegung der Federaufnahmen (15) am Waschaggregat (3) jeweils seitlich im unteren Bereich des Mantels des Laugenbehälters (4) ein eine Dreiecksform einnehmender Winkelblechstreifen (18) angeordnet ist.

8. Wäschebehandlungsmaschine nach Anspruch 7,
**dadurch gekennzeichnet,**
**dass** zur Festlegung der Federaufnahmen (16) am Rahmen (19) des Unterbaus (12) jeweils an den Längsseiten des Rahmens (19) U-förmig ausgebildete Winkelblechstreifen (20) vorgesehen sind.

9. Wäschebehandlungsmaschine nach Anspruch 8,
**dadurch gekennzeichnet,**
**dass** die Federaufnahmen (15) und (16) topfartig ausgebildet sind.

10. Wäschebehandlungsmaschine nach Anspruch 9,
**dadurch gekennzeichnet,**
**dass** der die Federaufnahme (15) und (16) bildende (21) Topf im Durchmesser etwa dem Außendurchmesser der außen liegenden Druckfeder (13) entspricht.

11. Wäschebehandlungsmaschine nach Anspruch 2,
**dadurch gekennzeichnet,**
**dass** der Innendurchmesser der außen liegenden Druckfeder (13) etwa dem Außendurchmesser der innen liegenden Druckfeder (14) entspricht.

12. Wäschebehandlungsmaschine nach einem der Ansprüche 5 bis 10,
**dadurch gekennzeichnet,**
**dass** die Federaufnahme (15, 16) einen zur Feder (13, 14) gerichteten, umlaufenden, ringförmigen Steg (21) umfasst, wobei der Außendurchmesser dieses als Führung ausgebildeten Stegs (21) etwa dem Innendurchmesser der außen liegenden Schraubfeder (13) entspricht und der Innendurchmesser des ringförmigen Stegs (21) etwa dem Außendurchmesser der innen liegenden Schraubfeder (14) entspricht.
